# EUROPÄISCHE PATENTSCHRIFT

(11) **EP 4 389 978 B1**
(45) Veröffentlichungstag und Bekanntmachung des Hinweises auf die Patenterteilung: **25.03.2026**
(21) Anmeldenummer: 23213181.3
(22) Anmeldetag: 30.11.2023
(51) Int. Cl.: E01C 19/28, E02D 3/026

(54) **BODENBEARBEITUNGSWALZE FÜR EINE BODENBEARBEITUNGSMASCHINE**
SOIL WORKING ROLLER FOR A SOIL WORKING MACHINE
ROULEAU DE TRAITEMENT DU SOL POUR UNE MACHINE DE TRAITEMENT DU SOL

(30) Priorität: 19.12.2022 DE 102022133783
(43) Veröffentlichungstag der Anmeldung: 26.06.2024
(73) Patentinhaber: Hamm AG, 95643 Tirschenreuth (DE)
(72) Erfinder: Bäuml, Stefan, Tirschenreuth (DE); Striegl, Marina, Altenstadt (DE)
(74) Vertreter: Ruttensperger Lachnit Trossin Gomoll

(56) Entgegenhaltungen:
- WO-A1-2022/128151
- WO-A1-2023/199836
- US-A1- 2013 223 930

## Beschreibung

Die vorliegende Erfindung betrifft eine Bodenbearbeitungswalze für eine Bodenbearbeitungsmaschine, insbesondere Bodenverdichter, umfassend einen in Richtung einer Walzendrehachse sich erstreckenden, die Walzendrehachse umgebenden Walzenmantel und einen Walzenantrieb zum Antreiben des Walzenmantels zur Drehung um die Walzendrehachse.

Bei beispielsweise als Bodenverdichter ausgebildeten Bodenbearbeitungsmaschinen ist es bekannt, zum Bewegen einer derartigen Bodenbearbeitungsmaschine über den zu bearbeitenden Boden hinweg eine oder gegebenenfalls mehrere an der Bodenbearbeitungsmaschine vorgesehene Bodenbearbeitungswalzen zur Drehung um eine jeweilige Walzendrehachse anzutreiben. Ein hierfür eingesetzter Walzenantrieb kann einen Hydraulikkreislauf mit einer beispielsweise durch eine Brennkraftmaschine angetriebenen Hydraulikpumpe und einem mit dem Walzenmantel einer derartigen Bodenbearbeitungswalze gekoppelten Hydraulikmotor umfassen.

Um den Einsatz fossiler Brennstoffe zu vermeiden, besteht die Tendenz, bei derartigen Walzenantrieben Elektro-Walzenantriebsmotoren zu verwenden. Zum Bewegen einer Bodenbearbeitungsmaschine über den zu bewegenden Untergrund mit der gewünschten Geschwindigkeit muss ein derartiger Elektro-Walzenantriebsmotor im Allgemeinen mit einer Getriebeanordnung gekoppelt werden, um die Drehzahl des Elektro-Walzenantriebsmotors in eine für die Bewegung der Bodenbearbeitungsmaschine geeignete Drehzahl der Bodenbearbeitungswalze umzusetzen, insbesondere zu untersetzen.

Eine Bodenbearbeitungswalze für eine Bodenbearbeitungsmaschine gemäß dem Oberbegriff des Anspruchs 1 ist aus der WO 2022/128151 A1 bekannt.

Es ist die Aufgabe der vorliegenden Erfindung, eine Bodenbearbeitungswalze bereitzustellen, bei welcher mit baulich einfachen Maßnahmen eine geeignete Drehzahl eines durch einen Elektro-Walzenantriebsmotor zur Drehung angetriebenen Walzenmantels der Bodenbearbeitungswalze erreicht werden kann.

Gemäß der vorliegenden Erfindung wird diese Aufgabe gelöst durch eine Bodenbearbeitungswalze für eine Bodenbearbeitungsmaschine, insbesondere Bodenverdichter, umfassend einen in Richtung einer Walzendrehachse sich erstreckenden, die Walzendrehachse umgebenden Walzenmantel und einen Walzenantrieb zum Antreiben des Walzenmantels zur Drehung um die Walzendrehachse, wobei die Bodenbearbeitungswalze dadurch gekennzeichnet ist, dass der Walzenantrieb einen Elektro-Walzenantriebsmotor und eine Getriebeanordnung umfasst, und dass ein Motor-Antriebsorgan des Elektro-Walzenantriebsmotors mit einem Getriebe-Eingangsorgan der Getriebeanordnung vermittels einer Drehzahl-Umsetzanordnung zur Drehmomentübertragung gekoppelt ist.

Durch das Bereitstellen der Drehzahl-Umsetzanordnung zwischen dem Elektro-Walzenantriebsmotor und der Getriebeanordnung wird einerseits die Möglichkeit geschaffen, den Elektro-Walzenantriebsmotor räumlich entkoppelt von der Getriebeanordnung zu positionieren. Andererseits stellt die Drehzahl-Umsetzanordnung bereits vor der Getriebeanordnung die Möglichkeit einer Drehzahlumsetzung bereit, so dass die Getriebeanordnung an sich mit einfacherer Struktur ausgebildet sein kann, gleichwohl aber durch Wechselwirkung der Drehzahl-Umsetzanordnung mit der Getriebeanordnung die zum Bewegen einer Bodenbearbeitungsmaschine erforderliche Drehzahl einer Bodenbearbeitungswalze bzw. eines Walzenmantels derselben erreicht werden kann.

Um auch im Bereich der Drehzahl-Umsetzanordnung eine einfache Struktur nutzen zu können, ist das Getriebe-Eingangsorgan durch den Elektro-Walzenantriebsmotor zur Drehung um die Walzendrehachse antreibbar, und das Motor-Antriebsorgan ist um eine zur Walzendrehachse exzentrische und im Wesentlichen parallele Motor-Drehachse drehbar.

Für eine kompakte Bauart der Bodenbearbeitungswalze können der Elektro-Walzenantriebsmotor, die Getriebeanordnung und die Drehzahl-Umsetzanordnung in einem von dem Walzenmantel umgebenen Walzeninnenraum angeordnet sein.

Da im Allgemeinen ein Elektro-Walzenantriebsmotor in einem Drehzahlspektrum, welches über dem für eine Bodenbearbeitungswalze zu erreichenden Drehzahlspektrum liegt, einen hohen Wirkungsgrad aufweist, wird vorgeschlagen, dass die Drehzahl-Umsetzanordnung zur Drehzahluntersetzung ausgebildet ist.

Das Motor-Antriebsorgan kann ein mit einer Motorwelle des Elektro-Walzenantriebsmotors zur gemeinsamen Drehung verbundenes Antriebsrad der Drehzahl-Umsetzanordnung umfassen, und das Getriebe-Eingangsorgan kann ein mit einer Getriebeeingangswelle der Getriebeanordnung zur gemeinsamen Drehung verbundenes, mit dem Antriebsrad zur Drehmomentübertragung gekoppeltes Abtriebsrad der Drehzahl-Umsetzanordnung umfassen.

Bei einer einfach aufzubauenden und zuverlässig betreibbaren Ausgestaltung kann vorgesehen sein, dass das Antriebsrad als Antriebs-Riemenscheibe ausgebildet ist, dass das Abtriebsrad als Abtriebs-Riemenscheibe ausgebildet ist, und dass die Antriebs-Riemenscheibe und die Abtriebs-Riemenscheibe durch wenigstens einen Riemen, vorzugsweise Zahnriemen, zur Drehmomentübertragung gekoppelt sind.

Bei einer alternativen Ausgestaltungsart können insbesondere dann, wenn bei größer gebauten Bodenbearbeitungsmaschinen sehr große Antriebsdrehmomente zu übertragen sind, das Antriebsrad als Antriebs-Zahnrad ausgebildet sein und das Abtriebsrad als Abtriebs-Zahnrad ausgebildet sein, und das Antriebs-Zahnrad und das Abtriebs-Zahnrad können:
- durch eine Kette zur Drehmomentübertragung miteinander gekoppelt sein, oder
- durch wenigstens ein Zwischen-Zahnrad zur Drehmomentübertragung miteinander gekoppelt sein,
   oder
- in Kämmeingriff miteinander stehen.

Die Getriebeanordnung kann als Planetengetriebe ausgebildet sein, welches zur Erlangung der erforderlichen Drehzahlumsetzung, insbesondere Untersetzung, wenigstens zwei seriell zur Drehmomentübertragung wirksame Planetengetriebestufen umfassen kann.

Um das in die Getriebeanordnung eingeleitete Drehmoment auf den Walzenmantel übertragen zu können, kann ein Getriebe-Ausgangsorgan der Getriebeanordnung mit dem Walzenmantel zur gemeinsamen Drehung um die Walzendrehachse verbunden sein.

Gemäß einem weiteren, vorzugsweise mit den vorangehenden Ausgestaltungsaspekten kombinierbaren Erfindungsaspekt kann bei einer Bodenbearbeitungswalze ein Schwingungserzeugungssystem mit einem Elektro-Unwuchtantriebsmotor und einer durch den Elektro-Unwuchtantriebsmotor zur Drehung um eine Unwuchtwellendrehachse antreibbaren Unwuchtwelle vorgesehen sein, wobei der Elektro-Unwuchtantriebsmotor vermittels wenigstens eines Kardangelenks mit der Unwuchtwelle zur gemeinsamen Drehung verbunden ist.

Vermittels eines derartigen Schwingungserzeugungssystems kann an einer Bodenbearbeitungswalze, je nach Bauart des Schwingungserzeugungssystems, eine Vibrationsbewegung erzeugt werden, also eine Auslenkung im Wesentlichen orthogonal zur Walzendrehachse hervorgerufen werden, oder eine Oszillationsbewegung erzeugt werden, also eine periodische Hin- und Her-Drehbewegung des Walzenmantels erzeugt werden, welche der Abrollbewegung überlagert ist. Durch das Bereitstellen des wenigstens einen Kardangelenks zwischen der Unwuchtwelle und dem Elektro-Unwuchtantriebsmotor wird der Elektro-Unwuchtantriebsmotor von an der Bodenbearbeitungswalze bzw. am Walzenmantel hervorgerufenen Schwingungsbewegungen im Wesentlichen entkoppelt, so dass eine Beeinträchtigung des Betriebs des Elektro-Unwuchtantriebsmotors vermieden wird.

Zur Erlangung einer effizienten Radialbewegungsentkopplung kann eine Motorwelle des Elektro-Unwuchtantriebsmotors vermittels eines Kardangelenks mit einer Kardanwelle gekoppelt sein, und die Kardanwelle kann vermittels eines weiteren Kardangelenks mit der Unwuchtwelle gekoppelt sein.

Die Unwuchtwelle kann an einer mit dem Walzenmantel um die Walzendrehachse drehbar verbundenen Walzen-Trägerstruktur um die Unwuchtwellendrehachse drehbar getragen sein, und der Elektro-Unwuchtantriebsmotor kann an einer den Walzenmantel um die Walzendrehachse drehbar tragenden Maschinen-Trägerstruktur, also einem im Betrieb grundsätzlich nicht rotierenden Systembereich, getragen sein.

Zur Erzeugung einer Oszillationsbewegung bzw. eines den Walzenmantel zur Durchführung einer Oszillationsbewegung beaufschlagenden, zur Walzendrehachse im Wesentlichen tangential orientierten Oszillationsdrehmoments können vermittels der Unwuchtwelle wenigstens zwei um eine jeweilige zur Unwuchtwellendrehachse exzentrische und im Wesentlichen parallele Unwuchtdrehachse drehbare Unwuchtmassen zur Drehung antreibbar sein. Alternativ oder zusätzlich kann zur Erzeugung einer Vibrationsbewegung bzw. einer den Walzenmantel zur Durchführung einer Vibrationsbewegung beaufschlagenden, zur Walzendrehachse im Wesentlichen orthogonal orientierten Vibrationskraft an der Unwuchtwelle eine mit der Unwuchtwelle um die Unwuchtwellendrehachse drehbare Unwuchtmasse getragen sein.

Die Unwuchtwellendrehachse ist vorteilhafterweise zur Walzendrehachse im Wesentlichen koaxial.

Die vorliegende Erfindung betrifft ferner eine Bodenbearbeitungsmaschine, insbesondere Bodenverdichter, umfassend wenigstens eine erfindungsgemäß aufgebaute Bodenbearbeitungswalze.

Die Erfindung wird nachfolgend mit Bezug auf die beiliegenden Figuren detailliert beschrieben. Es zeigt:
- Fig. 1: eine perspektivische Längsschnittansicht einer Bodenbearbeitungswalze;
- Fig. 2: eine Seitenansicht der Bodenbearbeitungswalze der Fig. 1 in Blickrichtung II in Fig. 1;
- Fig. 3: eine der Fig. 2 entsprechende Ansicht bei entferntem Abdeckgehäuse einer Drehzahl-Umsetzanordnung;
- Fig. 4: eine der Fig. 2 entsprechende Ansicht mit transparent dargestelltem Abdeckgehäuse der Drehzahl-Umsetzanordnung;
- Fig. 5: eine Längsschnittansicht der Bodenbearbeitungswalze, geschnitten längs einer Linie V-V in Fig. 4;
- Fig. 6: eine Seitenansicht einer Bodenbearbeitungsmaschine mit zwei Bodenbearbeitungswalzen.

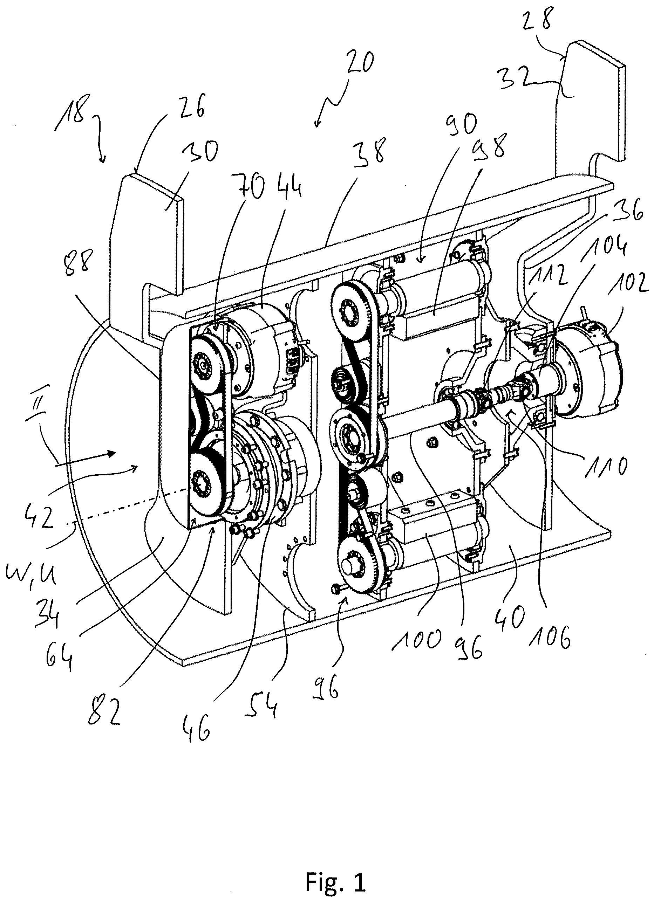

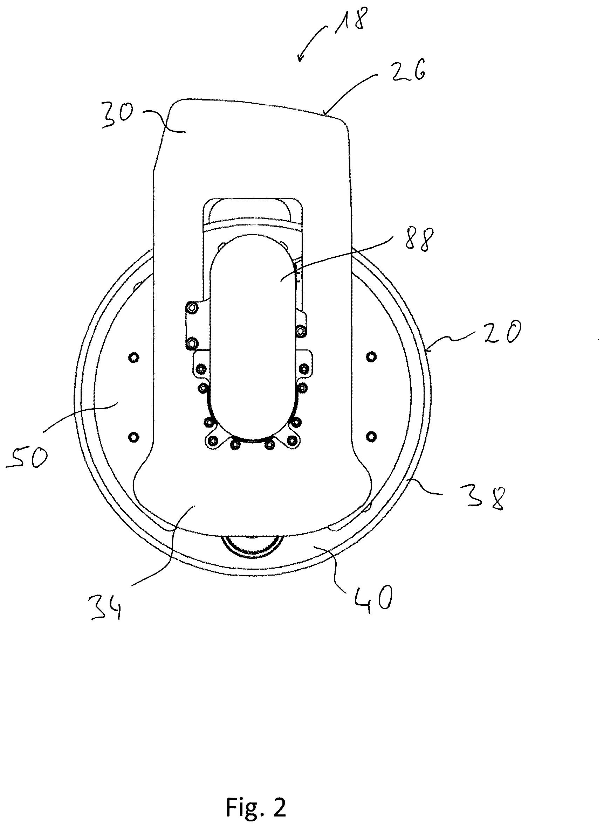

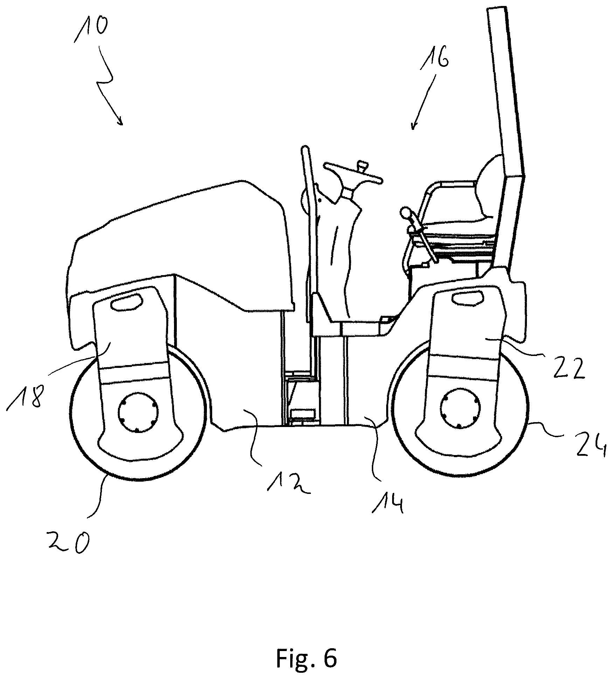

Bevor nachfolgend mit Bezug auf die Fig. 1 bis 5 der Aufbau einer Bodenbearbeitungswalze detailliert beschrieben wird, wird mit Bezug auf die Fig. 6 eine als Bodenverdichter ausgebildete Bodenbearbeitungsmaschine 10 beschrieben, an welcher beispielsweise eine derartige Bodenbearbeitungswalze Anwendung finden kann.

Die Bodenbearbeitungsmaschine 10 umfasst einen vorderen Maschinenrahmen 12 und einen zum Lenken der Bodenbearbeitungsmaschine 10 mit dem vorderen Maschinenrahmen 12 gelenkig verbundenen hinteren Maschinenrahmen 14. Am hinteren Maschinenrahmen 14 ist ein Bedienstand 16 für eine die Bodenbearbeitungsmaschine 10 bedienende Bedienperson vorgesehen.

Am vorderen Maschinenrahmen 12 ist vermittels einer allgemein mit 18 bezeichneten Maschinen-Trägerstruktur eine im dargestellten Beispiel als Verdichterwalze wirksame Bodenbearbeitungswalze 20 um eine zur Zeichenebene der Fig. 6 orthogonal stehende Walzendrehachse drehbar getragen. Gleichermaßen ist am hinteren Maschinenrahmen 14 vermittels einer Maschinen-Trägerstruktur 22 eine ebenfalls als Verdichterwalze wirksame Bodenbearbeitungswalze 24 um eine zur Zeichenebene der Fig. 6 orthogonale Walzendrehachse drehbar getragen.

Anhand der Fig. 1 bis 5 wird nachfolgend beispielhaft mit Bezug auf die Bodenbearbeitungswalze 20 und der dieser zugeordneten Maschinen-Trägerstruktur 18 deren Aufbau beschrieben. Es ist darauf hinzuweisen, dass in grundsätzlich gleicher Art und Weise die Bodenbearbeitungswalze 24 mit der Maschinen-Trägerstruktur 22 aufgebaut sein kann.

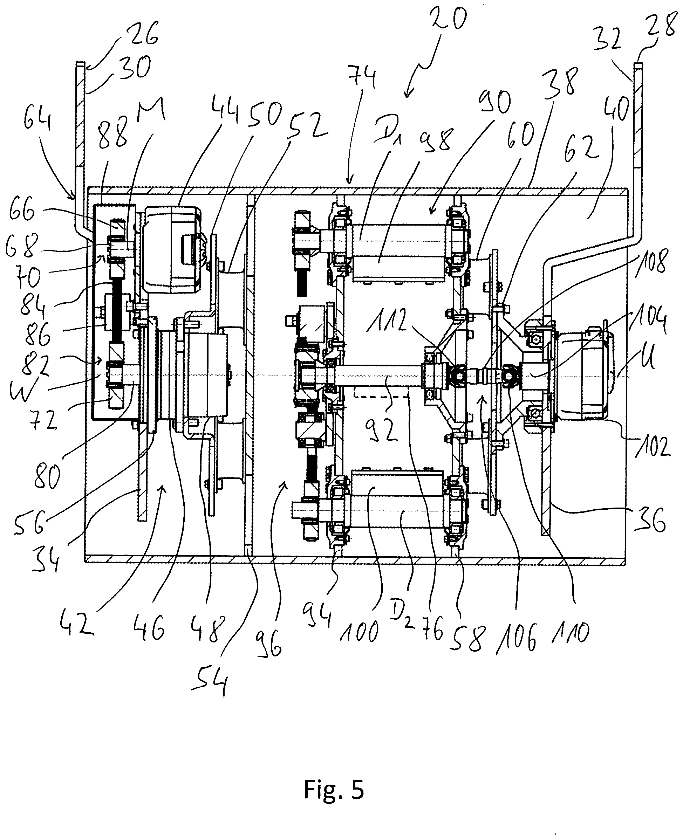

Insbesondere in den Fig. 1 und 5 ist zu erkennen, dass die Maschinen-Trägerstruktur 18 der Bodenbearbeitungswalze 20 zwei plattenartige Trägerelemente 26, 28 umfasst. Mit einem jeweiligen oberen Abschnitt 30, 32 können diese am vorderen Maschinenrahmen 12 festgelegt sein. Mit bezüglich des jeweiligen oberen Abschnitts 30, 32 in Richtung der Walzendrehachse W aufeinander zu versetzten unteren Abschnitten 34, 36 liegen die Trägerelemente 26, 28 in einem von einem Walzenmantel 38 umgebenen Walzeninnenraum 40 der Bodenbearbeitungswalze 20. In diesen Abschnitten 34, 36 tragen, wie nachfolgend detailliert erläutert, die beiden Trägerelemente 26, 28 den Walzenmantel 38 und verschiedene im Walzeninnenraum 40 angeordnete Systembereiche der Bodenbearbeitungswalze 20.

Es ist darauf hinzuweisen, dass beispielsweise bei einer schemelgelenkten Bodenbearbeitungsmaschine die beiden Trägerelemente 26, 28 an einem Lenkschemel festgelegt sein könnten bzw. einen Bestandteil eines derartigen Lenkschemels bilden könnten, der dann im Falle der Bodenbearbeitungswalze 20 in einem vorderen Bereich eines beispielsweise in gleicher Art und Weise auch die Bodenbearbeitungswalze 24 tragenden Maschinenrahmens lenkbar, also verschwenkbar, getragen sein kann.

Die Bodenbearbeitungswalze 20 umfasst einen allgemein mit 42 bezeichneten Walzenantrieb. Der Walzenantrieb 42 umfasst einen Elektro-Walzenantriebsmotor 44 und eine Getriebeanordnung 46. An einem beispielsweise gehäuseartig ausgebildeten Getriebe-Ausgangsorgan 48 der Getriebeanordnung 46 ist eine Kopplungsscheibe 50 getragen, welche über eine Mehrzahl elastischer Kopplungselemente 52 eine an eine Innenseite des Walzenmantels 40 beispielsweise durch Verschweißung fest angebundene Trägerscheibe 54, allgemein auch als Ronde bezeichnet, trägt bzw. damit zur gemeinsamen Drehung um die Walzendrehachse W verbunden ist. Das Getriebe-Ausgangsorgan 48, die Kopplungsscheibe 50 und die Trägerscheibe 54 sind somit zur gemeinsamen Drehung um die Walzendrehachse W verbunden.

Ein nicht rotierender Gehäusebereich 56 der Getriebeanordnung 46 ist an dem in den Walzeninnenraum 40 versetzt liegenden Abschnitt 34 des Trägerelements 26 getragen, so dass in dem in Fig. 1 und in Fig. 5 links dargestellten Bereich die Bodenbearbeitungswalze 20 bzw. deren Walzenmantel 38 über die Getriebeanordnung 46 an dem Trägerelement 26 der Maschinen-Trägerstruktur 18 um die Walzendrehachse W drehbar getragen ist.

An ihrem anderen axialen Endbereich ist die Bodenbearbeitungswalze 20 bzw. der Walzenmantel 38 derselben über eine weitere an der Innenseite des Walzenmantels 38 festgelegte Trägerscheibe 58, eine Mehrzahl elastischer Kopplungselemente 60 und eine mit diesen verbundene, im dargestellten Ausgestaltungsbeispiel mehrteilig aufgebaute Kopplungsbaugruppe 62 an dem in den Walzeninnenraum 40 versetzt liegenden Abschnitt 36 des Trägerelements 28 der Maschinen-Trägerstruktur 18 um die Walzendrehachse W drehbar getragen.

Der Walzenantrieb 42 umfasst zur Drehmomentübertragung zwischen dem Elektro-Walzenantriebsmotor 44 und der Getriebeanordnung 46 eine zur Drehzahluntersetzung ausgebildete Drehzahl-Umsetzanordnung 64. Die Drehzahl-Umsetzanordnung 64 umfasst ein im dargestellten Ausgestaltungsbeispiel als Antriebs-Riemenscheibe ausgebildetes Antriebsrad 66, welches zusammen mit einer Motorwelle 68 des Elektro-Walzenantriebsmotors 44 ein Motor-Antriebsorgan 70 bereitstellt.

Die Drehzahl-Umsetzanordnung 66 umfasst ferner ein als Abtriebs-Riemenscheibe ausgebildetes Abtriebsrad 72, welches zusammen mit einer Getriebeeingangswelle 80 der Getriebeanordnung 46 ein Getriebe-Eingangsorgan 82 bildet.

Zur Drehmomentübertragung zwischen dem Motor-Antriebsorgan 70 und dem Getriebe-Eingangsorgan 82 ist im dargestellten Ausgestaltungsbeispiel ein Riemen 84, vorzugsweise ausgebildet als Zahnriemen, vorgesehen. Um diesen unter Spannung zu halten, kann eine Spannrolle 86 vorgesehen sein.

Man erkennt insbesondere in den Fig. 1 und 5, dass der gesamte Walzenantrieb 42, also der Elektro-Walzenantriebsmotor 44, die Getriebeanordnung 46 und die Drehzahl-Umsetzanordnung 64, in dem von dem Walzenmantel 38 umgebenen Walzeninnenraum 40 angeordnet ist, so dass keine Systembereiche des Walzenantriebs 42 axial über den Walzenmantel 38 hervorstehen. Auch ein die Drehzahl-Umsetzordnung 64 axial abdeckendes und beispielsweise am Trägerelement 26 festgelegtes, deckelartiges Abdeckgehäuse 88 ist bei dieser Anordnung noch vollständig im Walzeninnenraum 40 positioniert.

Weiter ist zu erkennen, dass bei der Bodenbearbeitungswalze 20, der Elektro-Walzenantriebsmotor 44 bezüglich der Walzendrehachse W seitlich neben der Getriebeanordnung 46 liegt, sich mit dieser also im Wesentlichen vollständig axial überlappt und, beispielsweise ebenso wie der Gehäusebereich 56 der Getriebeanordnung 46, am Abschnitt 34 des Trägerelements 26 beispielsweise durch Verschraubung festgelegt sein kann. Das Motor-Antriebsorgan 70, also die Motorwelle 68 und das mit dieser zur gemeinsamen Drehung verbundene Antriebsrad 66, ist um eine zur Walzendrehachse W im Wesentlichen parallele, zu dieser exzentrisch positionierte Motor-Drehachse M drehbar. Es besteht somit hinsichtlich der Positionierung des Elektro-Walzenantriebsmotors 44 bezüglich der Getriebeanordnung 46 sowohl in axialer Richtung, als auch in radialer Richtung, eine vergleichsweise große Ausgestaltungsfreiheit.

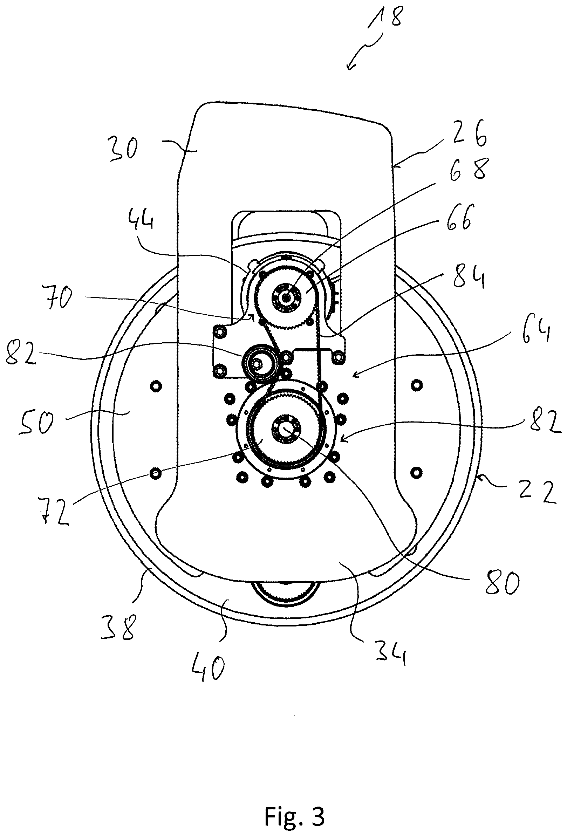

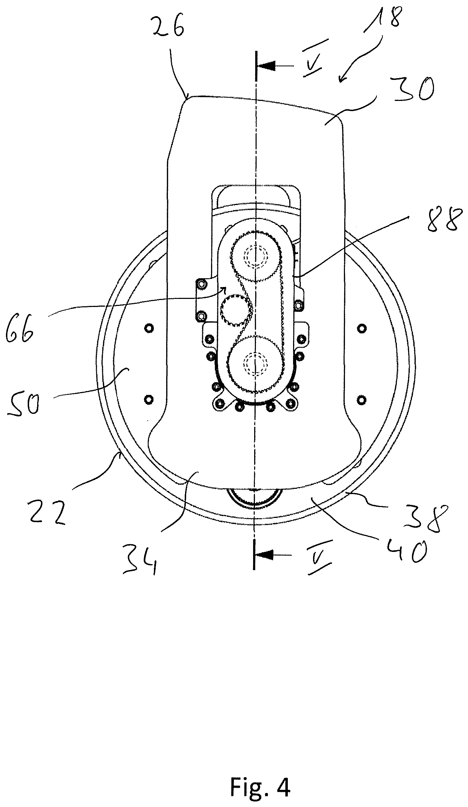

Insbesondere in den Fig. 3 und 4 ist zu erkennen, dass das Antriebsrad 66 und dass Abtriebsrad 72 zueinander unterschiedliche Durchmesser aufweisen. Insbesondere hat das Antriebsrad 66 einen kleineren Durchmesser, als das Abtriebsrad 72, so dass die Drehzahl-Umsetzanordnung 64 zur Drehzahluntersetzung wirksam ist und mithin das Getriebe-Eingangsorgan 82 mit geringerer Drehzahl rotiert, als das Motor-Antriebsorgan 70. Es findet somit im Bereich der Drehmomentübertragung zwischen dem Elektro-Walzenantriebsmotor 44 und der Getriebeanordnung 46 bereits eine erste Stufe der Drehzahluntersetzung statt, so dass die Getriebeanordnung 46, welche grundsätzlich auch zur Drehzahluntersetzung ausgelegt ist, nur noch in geringerem Ausmaß zur Untersetzung wirksam sein muss. Beispielsweise kann die Getriebeanordnung 46 als zweistufig ausgebildetes Planetengetriebe aufgebaut sein, bei welchem in zwei im Drehmomentenfluss seriell wirksamen Getriebestufen die Eingangsdrehzahl, also die Drehzahl der Getriebeeingangswelle 80, sukzessive auf eine Drehzahl herabgesetzt wird, welche für den Betrieb der Bodenbearbeitungsmaschine 10 in einem gewünschten Geschwindigkeitsbereich geeignet ist.

Es ist darauf hinzuweisen, dass die Drehzahl-Umsetzanordnung 64 in anderer Art und Weise als dargestellt ausgeführt sein könnte. So könnte der Riemen 84 beispielsweise als herkömmlicher Keilriemen ausgebildet sein, oder es könnten mehrere derartige Riemen 84 parallel zueinander mit einem bzw. mehreren entsprechend ausgebildeten Antriebsrädern 66 bzw. einem oder mehreren entsprechend ausgebildeten Abtriebsrädern 78 zusammenwirken. Bei einer weiteren alternativen Ausgestaltungsart könnte das Antriebsrad 66 als Antriebs-Zahnrad ausgebildet sein, und das Abtriebsrad 78 könnte als Abtriebs-Zahnrad ausgebildet sein. Diese könnten direkt in Kämmeingriff miteinander stehen oder könnten mit einem oder mehreren Zwischen-Zahnrädern zur Drehmomentübertragung in Kämmeingriff stehen. Auch könnten derartige Zahnräder über eine oder mehrere parallel zueinander wirkende Ketten miteinander gekoppelt und somit zur Drehmomentübertragung verbunden sein.

Bei einer weiteren alternativen Ausgestaltung könnte die Drehzahl-Umsetzanordnung 64 als Winkelgetriebe ausgebildet sein. Das mit der Motorwelle 68 gekoppelte Antriebsrad 66 und das mit der Getriebeeingangswelle 82 gekoppelte Abtriebsrad 72 sind dabei jeweils nach Art eines Kegelrades ausgebildet, ebenso wie ein zwischen diesen wirkendes bzw. mit diesen in Kämmeingriff stehendes Zwischen-Zahnrad, welches bei derartiger Ausgestaltung um eine zur Motor-Drehachse M und zur Walzendrehachse W parallele Drehachse drehbar ist. Bei jeder derartigen Paarung von miteinander kämmenden Kegelrädern stehen die beiden involvierten Drehachsen dann unter einem Winkel von etwa 90° zueinander.

Auch bei Einsatz eines Winkelgetriebes könnten das Antriebsrad 66 und das Abtriebsrad 72 direkt in Kämmeingriff miteinander stehen. Auch dabei können diese jeweils als Kegelrad ausgebildet sein. Bei derartiger Ausgestaltung besteht eine größere Freiheit hinsichtlich der Positionierung des Elektro-Walzenantriebsmotors 44 insbesondere hinsichtlich der Ausrichtung seiner Motor-Drehachse M. Diese könnte beispielsweise orthogonal zur Walzendrehachse W und somit auch zur Drehachse des Getriebe-Eingangsorgans 82 orientiert sein.

Die Bodenbearbeitungswalze 20 umfasst ferner ein allgemein mit 90 bezeichnetes Schwingungserzeugungssystem. Das Schwingungserzeugungssystem 90 umfasst eine Unwuchtwelle 92, welche in einem ihrer axialen Endbereiche bezüglich der Trägerscheibe 58 drehbar getragen ist und in ihrem anderen andren axialen Endbereich bezüglich einer weiteren Trägerscheibe 94 drehbar getragen ist und somit grundsätzlich im Walzeninnenraum 40 um eine zur Walzendrehachse W konzentrische Unwuchtwellendrehachse U drehbar ist. Die beiden Trägerscheiben 58,94 bilden somit eine Walzen-Trägerstruktur 74 für die Unwuchtwelle 92. Über ein allgemein mit 96 bezeichnetes Riementriebsystem sind mit der Unwuchtwelle 92 zwei mit einem Winkelabstand von 180° um die Walzendrehachse W bzw. die Unwuchtwellendrehachse U zueinander versetzt liegende Unwuchtmassen 98, 100 um jeweilige Unwuchtdrehachsen D₁, D₂ an den beiden Trägerscheiben 58, 94 drehbar getragen. Bei Rotation der beiden Unwuchtmassen 98, 100 um die jeweiligen Unwuchtdrehachsen D₁, D₂ erzeugen diese ein zur Walzendrehachse W im Wesentlichen tangential orientiertes Oszillationsdrehmoment, welches die Bodenbearbeitungswalze 20 bzw. den Walzenmantel 38 zur periodischen Hin- und Her-Drehbewegung um die Walzendrehachse W beaufschlagt.

Das Schwingungserzeugungssystem 90 umfasst ferner einen Elektro-Unwuchtantriebsmotor 102, der beispielsweise an dem Abschnitt 36 des Trägerelements 28 der Maschinen-Trägerstruktur 18 getragen ist. Eine Motorwelle 104 des Elektro-Unwuchtantriebsmotors 102 ist mit der Unwuchtwelle 92 vermittels einer allgemein mit 106 bezeichneten Kardanwelle zur gemeinsamen Drehung verbunden. Die Kardanwelle 106 umfasst einen Wellenabschnitt 108, der an seinen beiden axialen Enden jeweils über ein Kardangelenk 110 bzw. 112 mit der Motorwelle 104 des Elektro-Unwuchtantriebsmotors 102 einerseits und der Unwuchtwelle 92 andererseits gekoppelt ist.

Aufgrund des Einsatzes der Kardanwelle 108 wird eine radiale Entkopplung des Elektro-Unwuchtantriebsmotors 102 von der Unwuchtwelle 92 erreicht. Da die Unwuchtwelle 92 aufgrund des Vorhandenseins der elastischen Kopplungselemente 52, 60 grundsätzlich Radialbewegungen bezüglich des Elektro-Unwuchtantriebsmotors 102 durchführen kann, könnten ohne den Einsatz der Kardanwelle 106 Radialkräfte auf die Motorwelle 104 des Elektro-Unwuchtantriebsmotors 102 übertragen werden, so dass auch der mit der Motorwelle 104 gekoppelte Rotor entsprechend radial beaufschlagt werden könnte, was die Betriebscharakteristik bzw. die Funktionalität des Elektro-Unwuchtantriebsmotors 102 aufgrund ungewünschter bzw. undefinierter Relativbewegungen zwischen dem Rotor und dem Stator desselben beeinträchtigen könnte.

Es ist darauf hinzuweisen, dass alternativ oder zusätzlich zu der dargestellten Erzeugung eines Oszillationsdrehmoments durch das Schwingungserzeugungssystem 90 dieses auch zum Erzeugen einer Vibrationskraft bzw. einer Vibrationsbewegung ausgebildet sein könnte. Hierzu könnte an der Unwuchtwelle 92 eine weitere oder eine alternative, in Fig. 5 durch Strichlinie angedeutete Unwuchtmasse 76 mit zur Unwuchtwellendrehachse U exzentrischem Massenschwerpunkt vorgesehen sein, so dass bei der Rotation der Unwuchtwelle 92 radial wirkende Kräfte auf den Walzenmantel 38 ausgeübt bzw. übertragen werden und dieser in an sich bekannter Weise in eine Vibrationsbewegung versetzt werden kann.

## Patentansprüche

1. Bodenbearbeitungswalze für eine Bodenbearbeitungsmaschine, insbesondere Bodenverdichter, umfassend einen in Richtung einer Walzendrehachse (W) sich erstreckenden, die Walzendrehachse (W) umgebenden Walzenmantel (38) und einen Walzenantrieb (42) zum Antreiben des Walzenmantels (38) zur Drehung um die Walzendrehachse (W), wobei der Walzenantrieb (42) einen Elektro-Walzenantriebsmotor (44) und eine Getriebeanordnung (46) umfasst und ein Motor-Antriebsorgan (70) des Elektro-Walzenantriebsmotors (44) mit einem Getriebe-Eingangsorgan (82) der Getriebeanordnung (46) vermittels einer Drehzahl-Umsetzanordnung (64) zur Drehmomentübertragung gekoppelt ist, wobei das Getriebe-Eingangsorgan (82) durch den Elektro-Walzenantriebsmotor (44) zur Drehung um die Walzendrehachse (W) antreibbar ist, **dadurch gekennzeichnet, dass** das Motor-Antriebsorgan (70) um eine zur Walzendrehachse (W) exzentrische und im Wesentlichen parallele Motor-Drehachse (A) drehbar ist.

2. Bodenbearbeitungswalze nach Anspruch 1,
**dadurch gekennzeichnet, dass** der Elektro-Walzenantriebsmotor (44), die Getriebeanordnung (46) und die Drehzahl-Umsetzanordnung (64) in einem von dem Walzenmantel (38) umgebenen Walzeninnenraum (40) angeordnet sind.

3. Bodenbearbeitungswalze nach Anspruch 1 oder 2,
**dadurch gekennzeichnet, dass** die Drehzahl-Umsetzanordnung (64) zur Drehzahluntersetzung ausgebildet ist.

4. Bodenbearbeitungswalze nach einem der Ansprüche 1-3,
**dadurch gekennzeichnet, dass** das Motor-Antriebsorgan (70) ein mit einer Motorwelle (68) des Elektro-Walzenantriebsmotors (44) zur gemeinsamen Drehung verbundenes Antriebsrad (66) der Drehzahl-Umsetzanordnung (64) umfasst, und dass das Getriebe-Eingangsorgan (82) ein mit einer Getriebeeingangswelle (80) der Getriebeanordnung (46) zur gemeinsamen Drehung verbundenes, mit dem Antriebsrad (66) zur Drehmomentübertragung gekoppeltes Abtriebsrad (72) der Drehzahl-Umsetzanordnung (64) umfasst.

5. Bodenbearbeitungswalze nach Anspruch 4,
**dadurch gekennzeichnet, dass** das Antriebsrad (66) als Antriebs-Riemenscheibe ausgebildet ist, dass das Abtriebsrad (72) als Abtriebs-Riemenscheibe ausgebildet ist, und dass die Antriebs-Riemenscheibe und die Abtriebs-Riemenscheibe durch wenigstens einen Riemen (84), vorzugsweise Zahnriemen, zur Drehmomentübertragung gekoppelt sind.

6. Bodenbearbeitungswalze nach Anspruch 4,
**dadurch gekennzeichnet, dass** das Antriebsrad (66) als Antriebs-Zahnrad ausgebildet ist, dass das Abtriebsrad (72) als Abtriebs-Zahnrad ausgebildet ist, und dass das Antriebs-Zahnrad und das Abtriebs-Zahnrad:
- durch eine Kette zur Drehmomentübertragung miteinander gekoppelt sind,
oder
- durch wenigstens ein Zwischen-Zahnrad zur Drehmomentübertragung miteinander gekoppelt sind,
oder
- in Kämmeingriff miteinander stehen.

7. Bodenbearbeitungswalze nach einem der Ansprüche 1-6,
**dadurch gekennzeichnet, dass** die Getriebeanordnung (46) als Planetengetriebe ausgebildet ist.

8. Bodenbearbeitungswalze nach Anspruch 7,
**dadurch gekennzeichnet, dass** das Planetengetriebe wenigstens zwei seriell zur Drehmomentübertragung wirksame Planetengetriebestufen umfasst.

9. Bodenbearbeitungswalze nach einem der Ansprüche 1-8,
**dadurch gekennzeichnet, dass** ein Getriebe-Ausgangsorgan (48) der Getriebeanordnung (46) mit dem Walzenmantel (38) zur gemeinsamen Drehung um die Walzendrehachse (W) verbunden ist.

10. Bodenbearbeitungswalze nach einem der Ansprüche 1-9,,
**dadurch gekennzeichnet, dass** ein Schwingungserzeugungssystem (90) mit einem Elektro-Unwuchtantriebsmotor (102) und einer durch den Elektro-Unwuchtantriebsmotor (102) zur Drehung um eine Unwuchtwellendrehachse (U) antreibbaren Unwuchtwelle (92) vorgesehen ist, und dass der Elektro-Unwuchtantriebsmotor (102) vermittels wenigstens eines Kardangelenks (110, 112) mit der Unwuchtwelle (92) zur gemeinsamen Drehung verbunden ist.

11. Bodenbearbeitungswalze nach Anspruch 10,
**dadurch gekennzeichnet, dass** eine Motorwelle (104) des Elektro-Unwuchtantriebsmotors (102) vermittels eines Kardangelenks (110) mit einer Kardanwelle (106) gekoppelt ist und die Kardanwelle (106) vermittels eines weiteren Kardangelenks (112) mit der Unwuchtwelle (92) gekoppelt ist.

12. Bodenbearbeitungswalze nach Anspruch 11,
**dadurch gekennzeichnet, dass** die Unwuchtwelle (92) an einer mit dem Walzenmantel (38) um die Walzendrehachse (W) drehbar verbundenen Walzen-Trägerstruktur (74) um die Unwuchtwellendrehachse (U) drehbar getragen ist, und dass der Elektro-Unwuchtantriebsmotor (102) an einer den Walzenmantel (38) um die Walzendrehachse (W) drehbar tragenden Maschinen-Trägerstruktur (18) getragen ist.

13. Bodenbearbeitungswalze nach Anspruch 10, 11 oder 12,
**dadurch gekennzeichnet, dass** vermittels der Unwuchtwelle (92) wenigstens zwei um eine jeweilige zur Unwuchtwellendrehachse (U) exzentrische und im Wesentlichen parallele Unwuchtdrehachse (D₁, D₂) drehbare Unwuchtmassen (98, 100) zur Drehung antreibbar sind, oder/und dass an der Unwuchtwelle (92) eine mit der Unwuchtwelle (92) um die Unwuchtwellendrehachse (U) drehbare Unwuchtmasse (76) getragen ist.

14. Bodenbearbeitungswalze nach einem der Ansprüche 10-13,
**dadurch gekennzeichnet, dass** die Unwuchtwellendrehachse (U) zur Walzendrehachse (W) im Wesentlichen koaxial ist.

15. Bodenbearbeitungsmaschine, insbesondere Bodenverdichter, umfassend wenigstens eine Bodenbearbeitungswalze (20) nach einem der Ansprüche 1-14.

## Claims

1. A ground processing roller for a ground processing machine, in particular a ground compactor, comprising a roller shell (38) extending in the direction of a roller rotation axis (W) and surrounding the roller rotation axis (W) and a roller drive (42) for driving the roller shell (38) to rotate about the roller rotation axis (W), wherein the roller drive (42) comprises an electric roller drive motor (44) and a gear arrangement (46), and wherein a motor drive element (70) of the electric roller drive motor (44) is coupled to a gear input element (82) of the gear arrangement (46) by means of a speed conversion arrangement (64) for torque transmission, wherein the gear input element (82) can be driven by the electric roller drive motor (44) to rotate about the roller rotation axis (W), **characterized in that** the motor drive element (70) is rotatable about a motor rotation axis (A) which is eccentric and is essentially parallel to the roller rotation axis (W).

2. The ground processing roller of claim 1,
**characterized in that** the electric roller drive motor (44), the gear arrangement (46) and the speed conversion arrangement (64) are arranged in a roller interior (40) surrounded by the roller shell (38).

3. The ground processing roller of claim 1 or 2,
**characterized** inthat the speed conversion arrangement (64) is designed for speed reduction.

4. The ground processing roller of any one of claims 1-3,
**characterized in that** the motor drive element (70) comprises a drive wheel (66) of the speed converting arrangement (64) connected to a motor shaft (68) of the electric roller drive motor (44) for common rotation, and **in that** the gear input element (82) comprises a driven wheel (72) of the speed conversion arrangement (64) connected to a gear input shaft (80) of the gear arrangement (46) for common rotation and coupled to the drive wheel (66) for torque transmission.

5. The ground processing roller as claimed in claim 4,
**characterized in that** the drive wheel (66) is designed as a drive pulley, **in that** the driven wheel (72) is designed as a driven pulley, and **in that** the drive pulley and the driven pulley are coupled by at least one belt (84), preferably toothed belt, for torque transmission.

6. The ground processing roller of claim 4,
**characterized in that** the drive wheel (66) is designed as a drive gear, **in that** the driven wheel (72) is designed as a driven gear, and **in that** the drive gear and the driven gear:
- are coupled to one another by a chain for torque transmission,
or
- are coupled to one another by at least one intermediate gear for torque transmission,
or
- are in meshing engagement with each other.

7. The ground processing roller of any one of claims 1-6,
**characterized** inthat the gear arrangement (46) is designed as a planetary gear.

8. The ground processing roller of claim 7,
**characterized** inthat the planetary gear comprises at least two planetary gear stages that are effective in series for torque transmission.

9. The ground processing roller of any one of claims 1-8,
**characterized in that** a gear output element (48) of the gear arrangement (46) is connected to the roller shell (38) for common rotation about the roller rotation axis (W).

10. The ground processing roller of any one of claims 1-9,
**characterized in that** a vibration generation system (90) is provided with an electric unbalance drive motor (102) and an unbalance shaft (92) which can be driven by the electric unbalance drive motor (102) for rotation about an unbalance shaft rotation axis (U), and **in that** the electric unbalance drive motor (102) is connected to the unbalance shaft (92) for common rotation by means of at least one cardan joint (110, 112).

11. The ground processing roller of claim 10,
**characterized in that** a motor shaft (104) of the electric unbalance drive motor (102) is coupled to a cardan shaft (106) by means of a cardan joint (110) and the cardan shaft (106) is coupled to the unbalance shaft (92) by means of a further cardan joint (112).

12. The ground processing roller of claim 11,
**characterized in that** the unbalance shaft (92) is rotatably supported about the unbalance shaft rotation axis (U) on a roller support structure (74) which is rotatably connected to the roll shell (38) about the roll rotation axis (W), and **in that** the electric unbalance drive motor (102) is supported on a machine support structure (18) which rotatably supports the roller shell (38) about the roller rotation axis (W).

13. The ground processing roller of claim 10, 11 or 12,
**characterized in that,** by means of the unbalance shaft (92), at least two unbalanced masses (98, 100) which can be rotated about a respective unbalanced rotation axis (D₁, D₂) which is eccentric to the unbalance shaft rotation axis (U) and substantially parallel can be driven for rotation, and/or **in that** an unbalanced mass (76) which can be rotated with the unbalance shaft (92) about the unbalance shaft rotation axis (U) is supported on the unbalance shaft (92).

14. The ground processing roller of any one of claims 10-13,
**characterized in that** the unbalance shaft rotation axis (U) is essentially coaxial with the roller rotation axis (W).

15. A ground processing machine, in particular a ground compactor, comprising at least one ground processing roller (20) of any one of claims 1-14.

## Revendications

1. Un rouleau de traitement du sol pour une machine de traitement du sol, en particulier un compacteur de sol, comprenant une enveloppe de rouleau (38) s'étendant dans la direction d'un axe de rotation du rouleau (W) et entourant l'axe de rotation du rouleau (W) et un entraînement de rouleau (42) pour entraîner l'enveloppe de rouleau (38) à tourner autour de l'axe de rotation du rouleau (W), dans lequel l'entraînement de rouleau (42) comprend un moteur d'entraînement de rouleau électrique (44) et un agencement d'engrenages (46), et dans lequel un élément d'entraînement de moteur (70) du moteur d'entraînement de rouleau électrique (44) est couplé à un élément d'entrée d'engrenage (82) de l'agencement d'engrenages (46) au moyen d'un agencement de conversion de vitesse (64) pour la transmission du couple, dans lequel l'élément d'entrée d'engrenage (82) peut être entraîné par le moteur d'entraînement de rouleau électrique (44) pour tourner autour de l'axe de rotation du rouleau (W), **caractérisé en ce que** l'élément d'entraînement de moteur (70) peut tourner autour d'un axe de rotation du moteur (A) qui est excentrique par rapport et essentiellement parallèle à l'axe de rotation du rouleau (W).

2. Le rouleau de traitement du sol selon la revendication 1,
**caractérisé en ce que** le moteur électrique d'entraînement de rouleau (44), l'agencement d'engrenages (46) et l'agencement de conversion de vitesse (64) sont disposés dans un espace intérieur du rouleau (40) entouré par l'enveloppe de rouleau (38).

3. Le rouleau de traitement du sol selon la revendication 1 ou 2,
**caractérisé en ce que** l'agencement de conversion de vitesse (64) est conçu pour réduire la vitesse.

4. Le rouleau de traitement du sol selon l'une quelconque des revendications 1 à 3,
**caractérisé en ce que** l'élément d'entraînement de moteur (70) comprend une roue d'entraînement (66) de l'agencement de conversion de vitesse (64) reliée à un arbre moteur (68) du moteur d'entraînement de rouleau électrique (44) pour une rotation commune, et **en ce que** l'élément d'entrée d'engrenage (82) comprend une roue entraînée (72) de l'agencement de conversion de vitesse (64) reliée à un arbre d'entrée d'engrenage (80) de l'agencement d'engrenages (46) pour une rotation commune et couplée à la roue d'entraînement (66) pour la transmission du couple.

5. Le rouleau de traitement du sol selon la revendication 4,
**caractérisé en ce que** la roue d'entraînement (66) est conçue comme une poulie d'entraînement, **en ce que** la roue entraînée (72) est conçue comme une poulie entraînée, et **en ce que** la poulie d'entraînement et la poulie entraînée sont couplées par au moins une courroie (84), de préférence une courroie dentée, pour la transmission du couple.

6. Le rouleau de traitement du sol selon la revendication 4,
**caractérisé en ce que** la roue d'entraînement (66) est conçue comme un engrenage d'entraînement, **en ce que** la roue entraînée (72) est conçue comme une roue dentée entraînée, et **en ce que** la roue dentée d'entraînement et la roue dentée entraînée :
- sont couplés l'un à l'autre par une chaîne pour la transmission du couple,
ou
- sont couplés l'une à l'autre par au moins une roue dentée intermédiaire pour la transmission du couple,
ou
- sont en prise l'un avec l'autre.

7. Le rouleau de traitement du sol selon l'une quelconque des revendications 1 à 6,
**caractérisé en ce que** l'agencement d'engrenages (46) est conçu comme un engrenage planétaire.

8. Le rouleau de traitement du sol selon la revendication 7,
**caractérisé en ce que** l'engrenage planétaire comprend au moins deux étages d'engrenages planétaires qui sont efficaces en série pour la transmission du couple.

9. Le rouleau de traitement du sol selon l'une quelconque des revendications 1 à 8,
**caractérisé en ce qu'**un élément de sortie d'engrenage (48) de l'agencement d'engrenages (46) est relié à l'enveloppe de rouleau (38) pour une rotation commune autour de l'axe de rotation du rouleau (W).

10. Le rouleau de traitement du sol selon l'une quelconque des revendications 1 à 9,
**caractérisé en ce qu'un** système de génération de vibrations (90) est muni d'un moteur d'entraînement électrique à balourd (102) et d'un arbre à balourd (92) qui peut être entraîné par le moteur d'entraînement électrique à balourd (102) pour tourner autour d'un axe de rotation d'arbre à balourd (U), et **en ce que** le moteur d'entraînement électrique à balourd (102) est relié à l'arbre à balourd (92) pour une rotation commune au moyen d'au moins un joint de cardan (110, 112).

11. Le rouleau de traitement au sol selon la revendication 10,
**caractérisé en ce qu'**un arbre moteur (104) du moteur électrique à balourd (102) est couplé à un arbre à cardan (106) au moyen d'un joint de cardan (110) et l'arbre à cardan (106) est couplé à l'arbre à balourd (92) au moyen d'un autre joint de cardan (112).

12. Le rouleau de traitement au sol selon la revendication 11,
**caractérisé en ce que** l'arbre à balourd (92) est supporté de manière rotative autour de l'axe de rotation d'arbre à balourd (U) sur une structure de support de rouleau (74) qui est reliée de manière rotative à l'enveloppe de rouleau (38) autour de l'axe de rotation du rouleau (W),
et **en ce que** le moteur électrique d'entraînement à balourd (102) est supporté sur une structure de support de machine (18) qui supporte de manière rotative l'enveloppe de rouleau (38) autour de l'axe de rotation du rouleau (W).

13. Le rouleau de traitement du sol selon la revendication 10, 11 ou 12,
**caractérisé en ce que,** au moyen de l'arbre à balourd (92), au moins deux masses à balourd (98, 100) pouvant tourner autour d'un axe de rotation à balourd respectif (D₁, D₂) excentrique par rapport à l'axe de rotation de l'arbre à balourd (U) et sensiblement parallèle à celui-ci peuvent être entrainées en rotation, et/ou **en ce qu'**une masse à balourd (76) pouvant tourner avec l'arbre à balourd (92) autour de l'axe de rotation de l'arbre à balourd (U) est supportée sur l'arbre à balourd (92).

14. Le rouleau de traitement du sol selon l'une quelconque des revendications 10 à 13,
**caractérisé en ce que** l'axe de rotation de l'arbre à balourd (U) est essentiellement coaxial à l'axe de rotation du rouleau (W).

15. Une machine de traitement du sol, en particulier un compacteur de sol, comprenant au moins un rouleau de traitement du sol (20) selon l'une quelconque des revendications 1 à 14.
